Europäisches Patentamt

European Patent Office

Office européen des brevets

(11) Publication number: **0 355 874**
**A1**

# EUROPEAN PATENT APPLICATION

(21) Application number: 89201199.0

(51) Int. Cl.⁴: **C08J 9/08 , C08J 9/14**

(22) Date of filing: **12.05.89**

A request for correction of the description and claims has been filed pursuant to Rule 88 EPC. A decision on the request will be taken during the proceedings before the Examining Division (Guidelines for Examination in the EPO, A-V, 2.2).

(30) Priority: **12.07.88 BE 8800806**

(43) Date of publication of application:
**28.02.90 Bulletin 90/09**

(84) Designated Contracting States:
**AT BE CH DE ES FR GB GR IT LI LU NL SE**

(71) Applicant: **RECTICEL**
**Avenue de Broqueville 12**
**B-1150 Bruxelles(BE)**

(72) Inventor: **Jourquin, Lucien**
**Cooppallaan 156/1**
**B-9200 Wetteren(BE)**
Inventor: **Mortelmans, Rudi**
**Spinmolenplein 146**
**B-9000 Gent(BE)**
Inventor: **Du Prez, Eddie**
**Molenberg 28**
**B-9660 Brakel(BE)**
Inventor: **Van De Velde, André**
**Wareslagedreef 61**
**B-9170 Waasmunster(BE)**

(74) Representative: **Callewaert, Jean et al**
**Bureau Gevers S.A. rue de Livourne 7 bte 1**
**B-1050 Bruxelles(BE)**

(54) **A method for preparing a high resilient polyurethane foam.**

(57) A method for preparing a high resilient flexible polyurethane foam, in slabstocks and moulding, wherein a modified or not high reactive polyether-polyol, having an average molecular weight from 3,000 to 10,000 and an average functionality not larger than 4 with an amount of at least 50 % hydroxyl groups, is brought into reaction with organic polyisocyanates in the presence of a "cross-linker/extender", a catalyst and a chemical and physical blowing means and eventually in the presence of a relatively weak foam stabilizer, whereby the physical blowing means comprises methylformate.

## A method for preparing a high resilient polyurethane foam.

The invention relates to a method for preparing a high resilient polyurethane foam wherein a modified or not high reactive polyether-polyol, having an average molecular weight from 3,000 to 10,000 and an average functionality not larger than 4 is brought into reaction with organic polyisocyanates, in the presence of a catalyst, a cross-linker/extender, a chemical and physical blowing means, and eventually a foam stabilizer with a weak stabilizing effect.

For the production of flexible polyurethane foams use is made of blowing means which, in a large degree, determine the density and the hardness of the foam.

Beside $CO_2$-gas which is liberated in a chemical way by the reaction of water and (poly)isocyanates, use is made of an additional physical blowing means for a large number of different foam qualities having a low density and/or a low hardness.

In the present product technology for preparing flexible polyurethane foam, trichlorofluoromethane ($CCl_3F$) is used as a physical blowing means (and in a less measure methyelenechloride $CH_2Cl_2$), which, due to particular characteristics, leads to an optimum processability and optimal properties of the formed flexible polyurethane foam.

According to experts and recent scientifical studies hydrocarbons comprising chloride and fluor (among which $CCl_3F$) are amongst those which lead to a destruction of the ozone layer. In that optic it is then almost sure that i.a. the use of $CCl_3F$ as physical blowing means will be strongly limited in the future and certainly be forbidden.

The use of alkylalkanoate compounds with a molecular weight of less than 74 as physical blowing means for the production of flexible polyurethane foam is already known and is i.a. described in the US patent 3,879,315.

In that US patent 3,879,315 the accent is put on the use of a mixture comprising at the most 50 % by weight methylformate and at least 50 % by weight $CCl_3F$ and certainly of an azeotropic mixture comprising 18 % by weight methylformate and 82 % by weight $CCl_3F$ as physical blowing means in conventional (standard polyether) flexible foam formulation, with the economical purpose of substituting a part of the $CCl_3F$ by methylformate, due to which a larger gas volume per kilo of blowing means is obtained and thus an increase of the blowing efficiency (by unit of weight of physical blowing means).

The use of pure methylformate is only briefly mentioned in a single example, without mentioning the measured physical foam properties. In that sole example cracks have been observed in the foam.

From that patent it follows that from an industrial point of view, it is required to still use a relatively important amount of hydrocarbons comprising fluor and chloride as physical blowing means in the classical formulation for preparing flexible polyurethane foam, because the amount of methylformate as physical blowing means may not exceed a certain limit due to the critical processability and the worse physical properties of the obtained product compared with a method wherein trichlorofluoromethane and/or methylenechloride is used as a physical blowing means.

In the Belgian patent application n° 08800740 of the same applicant, a method for preparing a traditional flexible polyurethane foam (standard polyether) with essentially methylformate as blowing means is described, whereby it is necessary to adapt the classical foam formulation by adding a cross-linker/extender and/or an amine catalyst with delayed action.

In both above mentioned patent documents, the invention relates to a method for preparing traditional flexible polyurethane foams (hot cure) on the basis of conventional polyether-polyols.

The object of the invention is to prevent a method for preparing a high resilient flexible polyurethane foam ("cold cure").

For that purpose use is made of a high reactive polyether-polyol of which the amount of primary hydroxyl groups comprises at least 50 %, together with a physical blowing means essentially comprising methylformate.

In a particular embodiment of the invention use is made of a physical blowing means that is substantially composed of pure methylformate.

Other particularities and advantages of the invention will become clear from the description given hereunder form i.a. some typical foam formulations according to the invention ; this description is only given by way of example and does not limit the scope of the invention.

It is the purpose of this invention to present a method for preparing high resilient flexible polyurethane foam with a physical blasting means composed of methylformate and a mixture of methylformate with $CCCl_3F$ and/or other known haloganated blowing means, such as methylenechloride, whereby preferably the main part of the blowing means is formed by methylformate.

2

Preference is even given to the use of pure methylformate or a mixture of methylformate with known not completely halogenated blowing means as only physical blowing means, through which the use of trichlorofluoromethane can be completely eliminated from the production process.

It is indeed so that the known not completely halogenated blowing means, except for some exceptions, do not have much influence on the destruction process of the ozone layer. Thereupon there is tried, according to the invention, to guaranty an optimal processability and to produce a polyurethane foam of which the mechanical and confort characteristics, which are proper to high resilient polyurethane foam, are comparable to those obtained by using trichlorofluoromethane as physical blowing means.

The invention more particularly relates to a method for preparing high resilient polyurethane foams which are produced in slabstocks or in mouldings.

The difference between so-called high resilient flexible polyurethane foam, beter known under the name high resilient flexible polyurethane foam, and traditional flexible polyurethane foams on the basis of conventional polyether-polyols is fundamentally situated in the different chemical structure of the used raw materials, more particularly of the polyether-polyols and the silicon surfactants.

For the production of the so-called traditional polyurethane foams there is generally started from polyether-polyols with a relatively low molecular weight and a low reactivity, whereby as silicon surfactants with strong stabilising effect use is made of polyalkylsiloxane polyether block copolymere having a relatively high molecular weigth.

For the high resilient polyurethane foams there is started from a relatively high reactive polyether-polyol having a higher main molecular weight and in function of the specific used type of polyether-polyol use is made or not either of a silicon surfactant with a relatively low molecular weight, which has a weak stabilising effect. Thereupon it is generally known that for preparing high resilient polyurethane foam there is still added an amount of cross-linkers/extenders to the chemical formulation, of which the function in the total reaction system is again dependent of the specifically used type of polyether-polyol.

The use of these other raw materials also provides a flexible polyurethane foam which, for what concerns its cellular structure and physical properties, differs fundamentely from those of the so-called traditional flexible polyurethane foams.

However, as has been indicated hereabove, the use of methylformate as physical blowing means in the traditional flexible polyurethane foams is only possible by applying fundamental modifications in the formulations with respect to the classical formulations wherein use is only made of trichlorofluoromethane and/or methylene chloride as physical blowing means, and according to the invention, there has been established that in an unexpected way, without any problems, high resilient flexible polyurethane foams can be manufactured by only replacing the generally known physical blowing means, such as trichlorofluoromethane, by an equivalent amount of pure methylfor mate or a mixture of methylformate and known physical blowing means while maintaining the optimal processability and the physical characteristics of the formed foam.

The polyether-polyols which are used in the method according to the invention are the same as those used for the production of high resilient flexible polyurethane foams and have, in the most general case, a molecular weight between 3,000 and 10,000 and a functionality not higher than 4. The traditional polyether-polyols, poly-addition products of alkylene oxides such as propylene-and/or ethylene-oxide on a starter, such as ethylene glycol, trimethylolpropane and others, with however an amount of primary hydroxyl groups which is at least 50 % of the total number of hydroxyl groups present are included therein.

Further preference is given to so-called modified polyols, in such a way that these polyols comprise an organic solid phase in dispersion, such as i.a. a poly-addition product of an alkanolamine with an organic polyisocyanate (PIPA-technology of the Isochem company), a polymerisation product of the reaction of an organic polyisocyanate with a polyamine and/or hydrazine and/or hydrazide (PHD-technology of the Company Bayer/Mobay) or a vinylcopolymer as reaction product of acrylonitrile and styrene (for example of the Company Union Carbide, B.P. Chemicals or Dow).

Generally the polyol, according to the invention, can be a mixture of different polyols but then in such a way that the main molecular weight of that polyol lies between 3,000 and 10,000, and that the functionality is not higher than 4 and that the amount of primary hydroxyl groups comprises at least 50 %.

The organic polyisocyanates have a general form $X(NCO)i$, whereby is at least equal to 2, and generally smaller than 6, and wherein X is an aliphatic cycloaliphatic or aromatic radical, substituted or not with an halogene or alcoxy-group, with as most principal toluene-di-isocyanate (2.4 and 2.6), generally indicated as TDI and methylene-di-phenyl-di-isocyanate, generally indicated as MDI. Also derivates, prepolymers (i.a. trimers) and mixture of all those substances can be used in a method according to the invention.

For the production of high resilient polyurethane foams, use is generally made of the 2.4 and 2.6 isomers of toluene-di-isocyanates and methylene-di-isocyanates (pure or not) or mixtures thereof.

3

Beside polyols and polyisocyanates water is still present, and/or another chemical compound, which by reaction with polyisocyanates is transformed into $CO_2$ gas which is responsible for part of the foam forming.

The total foam forming is obtained by adding polyisocyanates, a chemical blowing means and an extra physical blowing means to the polyol, in case of the present invention a mixture of trichlorofluoromethane, other known completly halogenated hydrocarbons, such as dichlorodifluoromethane, trichlorotrifluoroethane, dichlorotetrafluoroethane, known not completely halogenated hydrocarbons, such as methylene-chloride, ethylene-chloride, bromoethane, 1,1,1-trifluoro2,2-dichloroethane, 1,1,1,2-tetrafluoroethane, dichlorofluoroethane, chloro-1,2,2,2-tetrafluoroethane, chloropropene, 1-chloropropane, 2-chloropropane and methylformate of which the concentration on methylformate in this mixture comprises preferably at least 50 % by weight.

For environmental reasons, preference is given to the use of a pure methylformate or a mixture of methylformate with known not completely halogenated blowing means as sole physical blowing means.

Particular to the known methods for preparing high resilient polyurethane foams, is that cross-linkers/extenders are always added to the reaction mixture. Those are low molecular compounds with active hydrogen with respect to isocyanates groups of the organic polyisocyanates. They are generally characterized by a functionality which comprises at least two. As examples we can mentione here : diethanolamine, di-iso-propanolamine, PU 3229 (Bayer) and so on.

As foam stabilizer use can be made of polyalkylsiloxane polyether copolymers which, contrary to the stabilizers for traditional flexible polyurethane foams, are of the weak stabilizing type with a relatively low molecular weight. The known usual amine compounds, such as the typical tertiar amine catalyst triethylene diamine (Dabco) and bis-(2-dimethylaminoethyl)-ether, even as eventually the known organo-metal catalyst, such as organo-tin comounds tinoctoate or di-butylindilaurate can be added as catalysts for the preparation of high resilient polyurethane foams.

If necessary additional products, such as fire retarders, among which melamine, filling substances, celopeners, pigments, additional cross-linkers, antioxidantia and other generally known additives can be added to the formulation.

The amount of physical blowing means which is used can vary from 1 to 30 parts by weight with respect to 100 parts by weight polyol.

In a particular embodiment of the invention, that physical blowing means comprises at least 50 % by weight methylformate and at the most 50 % by weight of a mixture consisting of completely or not halogenated hydrocarbon compounds.

A particular preference is however given to a as large as possible amount of methylformate in the physical blowing means of at least 95 % and preferably substantially pure methylformate.

In the examples given hereunder more particularly the following raw materials have been used :

## 1) Polyether polyols

| Polyol | Average molecular weight | Hydroxyl-number (IOH) (mgKOH/g) | % prim. hydroxyl-groups | Organic solid substances in dispersion | |
|--------|--------------------------|----------------------------------|--------------------------|------------------------------------------|-----|
| | | | | type | % |
| P1 | 5200 | 30 - 34 | 60 | organ.polyisocyanates + polyamine ("PHD") | 10 |
| P2 | 5400 | 29 - 33 | 70 | styrene-acrylonitrile block-copolymere | 15 |
| P3 | 5000 | 49 - 53 | 80 | TDI 80 + triethanolamine ("PIPA") | 10 |
| P4 | 6200 | 26 - 30 | 85 | -- | -- |

## 2) Organic polyisocyanates

$I_1$ is a mixture of 80 % by weight 2.4 toluene diisocyanate and 20 % by weight 2.6 toluene diisocyanate (TDI80).

$I_2$ is a MT58, Bayer (modified toluene-di-isocyanates).

K = isocyanate index and represents the excess of isocyanates with respect to the theoretical required amount and can vary between 90 and 120.

3) Catalysts, gelstabilisers and cross-linkers

-SO : tinoctoate
-AI : a mixture of 70 % by weight bis (2-dimethylaminoethyl)-ether and 30 % by weight dipropyleneglycol.
-DABCO 33 LV : a mixture of 33 % by weight triethylenediamine and 67 % by weight dipropyleneglycol.
-DEOA : diethanolamine
-PU 3229 : gelstabiliser, Bayer
-PU 3236 : cross-linker, Bayer
-DIPA : diisopropanolamine

4) Weak stabilisers

-AC 3367, Bayer
-SH 208, SH 214, BP Chemicals
-B 8636, Goldschmidt

5) Fire retarders

-TCEP : Tris(2-chloroethyl)phosphate
-melamine

6) Blowing means

-chemical : water
-physical : R-11 : trichlorofluoromethane
MF : methylformate.

In Table 1 an overview is given of the used test methods for the physical and mechanical characteristics of the foam.

On a semi-industrial machine foam blocks having the dimensions 1 x 2 x 0.4m have been produced. Two days after the production physical tests have been performed on the obtained polyurethane foam samples.

The chemical composition of the different prepared mixtures is represented in the Tables 2 and 3 given hereunder, while the results of the physical experiments are represented in Tables 4 and 5 given hereunder.

In each of the examples a test has been executed with a physical blowing means that is essentially made of methylformate and a blowing means that consists of trichlorofluoromethane (R-11) whereby all other components are the same in the same amounts.

The comparative tests allow to establish that, independently of the obtained foam density, trichlorofluoromethane can be substituted by an equivalent amount of methylformate as physical blowing means for the production of high resilient polyurethane foams, without having to change other formulations. This equivalent amount of methylformate comprises practically half of the necessary amount of trichlorofluoromethane. As can be concluded the obtained physical characteristics are completely comparable. In all cases good high resilient polyurethane foams have been obtained. Also if in a relatively high amount melamine has been added to the foam formulation in order to satisfy the BS5852 part 2-test the physical characteristics of both types polyurethane foam remain comparable.

TABLE 1

| Used standard for determining the physical foam characteristics. | | |
|---|---|---|
| CHARACTERISTICS | UNIT | STANDARD |
| Netto density | Kg/m³ | ISO 845 |
| ILD - hardness | N | ISO 2439B |
| Sag factor (SF | - | ILD 65%/ILD 25% |
| CLD - hardness | kPa | ISO/DIS 3386 |
| Elongation by wrinkle | % | ISO 1798 |
| Intensity of tensile stress | kPa | ISO 1798 |
| Intensity of cracking stress | N/cm | ASTM D3574 |
| Elasticity | % | ASTM D3574 |
| Compression sets | % | ISO 1856B |
| Air resistance | cm H20 | internal Recticel method |

(1) The internal Recticel method for determining the air resistance of flexible polyurethane foam has as object to quantify the open/closed cell characteristics of the foam.

Through a foam sample having the dimensions of 400 X 400 X 100 air is blown by means of a tin tube in a plate, at a pressure of 1.5 bar and a throughput of 250 ml/sec.

The resistance which is felt by the air in order to cross the foam sample is transmitted on a water column, where the so-called air resistance is read in cm-water.

Table 2

| Formulations - Examples 1 - 5 | | | | | | | | | | |
|---|---|---|---|---|---|---|---|---|---|---|
| EXAMPLE | 1 | | 2 | | 3 | | 4 | | 5 | |
| R-11 | 15 | - | 9 | - | 3 | - | 15 | - | 8 | - |
| MF | - | 7,5 | - | 4,5 | - | 1,5 | - | 7 | - | 4 |
| P1 | 100 | 100 | - | - | 100 | 100 | 100 | 100 | 100 | 100 |
| P2 | - | - | 100 | 100 | - | - | - | - | - | - |
| Total water | 2,6 | 2,6 | 2,2 | 2,2 | 1,8 | 1,8 | 3,0 | 3,0 | 3,2 | 3,2 |
| I | 35,9 | 35,9 | 31,0 | 31,0 | 26,3 | 26,3 | 42,1 | 42,1 | 39,8 | 39,8 |
| K | 105 | 105 | 110 | 110 | 100 | 100 | 110 | 110 | 105 | 105 |
| SO | 0,15 | 0,15 | - | - | 0,15 | 0,15 | 0,1 | 0,1 | 0,1 | 0,1 |
| Al | 0,05 | 0,05 | 0,04 | 0,04 | 0,05 | 0,05 | 0,05 | 0,05 | 0,05 | 0,05 |
| DABCO33LV | 0,15 | 0,15 | 0,12 | 0,12 | 0,2 | 0,2 | 0,15 | 0,15 | 0,15 | 0,15 |
| DEOA | 1,0 | 1,0 | 1,2 | 1,2 | 1,0 | 1,0 | 1,0 | 1,0 | 1,0 | 1,0 |
| PU 3229 | 0,8 | 0,8 | - | - | 0,7 | 0,7 | 1,0 | 1,0 | 0,7 | 0,7 |
| PU 3236 | - | - | - | - | - | - | - | - | 2,0 | 2,0 |
| AC 3367 | 0,5 | 0,5 | - | - | 0,25 | 0,25 | 0,8 | 0,8 | 0,7 | 0,7 |
| SH 208 | - | - | 0,7 | 0,7 | - | - | - | - | - | - |
| SH 214 | - | - | 0,1 | 0,1 | - | - | - | - | - | - |
| Melamine | - | - | - | - | - | - | 35 | 35 | 35 | 35 |
| TCEP | 4 | 4 | - | - | - | - | - | - | 2 | 2 |

Table 3

| Formulations - Examples 6 and 7 | | | | |
|---|---|---|---|---|
| EXAMPLE | 6 | | 7 | |
| R-11 | 7 | - | 15 | - |
| MF | - | 3,5 | - | 7 |
| P1 | - | - | - | - |
| P2 | - | - | - | - |
| P3 | 100 | 100 | - | - |
| P4 | - | - | 100 | 100 |
| Total water | 3,3 | 3,3 | 4 | 4 |
| I1 | 45,7 | 45,7 | - | - |
| I2 | - | - | 58,9 | 58,9 |
| K | 105 | 105 | 98 | 98 |
| SO | 0,1 | 0,1 | - | - |
| Al | 0,1 | 0,1 | - | - |
| DABCO 33LV | 0,1 | 0,1 | 0,2 | 0,2 |
| DEOA | 1,5 | 1,5 | 1,9 | 1,9 |
| DIPA | - | - | 3,7 | 3,7 |
| PU 3229 | - | - | - | - |
| PU 3236 | - | - | - | - |
| AC 3367 | - | - | - | - |
| SH 208 | - | - | - | - |
| SH 214 | - | - | - | - |
| B8636 | 0,8 | 0,8 | - | - |
| Melamine | - | - | - | - |
| TCEP | 3 | 3 | - | - |

Table 4

| Physical characteristics - Examples 1 - 5 | | | | | | | | | | | |
|---|---|---|---|---|---|---|---|---|---|---|---|
| EXAMPLE | | | 1 | | 2 | | 3 | | 4 | | 5 | |
| Rise time (sec) | | | 165 | 175 | 130 | 145 | 165 | 160 | 200 | 195 | 170 | 170 |
| Netto-density (kg/m$^3$) | | | 21,5 | 21,4 | 29,4 | 29,6 | 43,0 | 42,1 | 26,0 | 25,6 | 31,3 | 31,2 |
| ILD | | 25 % | 34 | 31 | 51 | 46 | 75 | 70 | 51 | 45 | 58 | 57 |
| | | 40 % (N) | 45 | 41 | 66 | 60 | 99 | 92 | 71 | 62 | 79 | 79 |
| | | 65 % | 85 | 80 | 131 | 121 | 202 | 188 | 155 | 136 | 170 | 176 |
| Sag factor | | | 2,5 | 2,6 | 2,6 | 2,6 | 2,7 | 2,7 | 30 | 3,0 | 2,9 | 3,1 |
| CLD | | 25 % | 0,8 | 0,8 | 1,2 | 1,1 | 1,8 | 1,7 | 1,3 | 1,3 | 1,6 | 1,6 |
| | | 40 % (kPa) | 1,0 | 1,0 | 1,6 | 1,4 | 2,3 | 2,2 | 1,8 | 1,7 | 2,2 | 2,1 |
| | | 60 % | 1,8 | 1,8 | 2,8 | 2,6 | 4,1 | 3,9 | 3,6 | 3,4 | 4,2 | 4,2 |
| Elongation by cracking (%) | | | 155 | 160 | 170 | 185 | 145 | 165 | 80 | 85 | 95 | 90 |
| Intensity of tensile stress (kPa) | | | 65 | 70 | 90 | 100 | 90 | 95 | 50 | 50 | 60 | 55 |
| Intensity of cracking stress (N/cm) | | | 2,6 | 2,8 | 3,0 | 3,1 | 2,5 | 2,6 | 2,1 | 2,0 | 2,4 | 2,4 |
| Elasticity (%) | | | 55 | 55 | 64 | 63 | 68 | 67 | 55 | 50 | 52 | 53 |
| Compression set (%) | | 90 % | 15,6 | 13,9 | 4,8 | 6,4 | 2,9 | 5,0 | 14,0 | 13,1 | 15,4 | 13,4 |
| | | 75 % | 12,3 | 13,9 | 4,7 | 6,2 | 2,5 | 2,8 | 11,6 | 10,9 | 11,5 | 11,4 |
| Air resistance (cmH$_2$O) (min-max) | | | 1-2 | 2-3 | 1-2 | 1-2 | 1-3 | 1-3 | 1-4 | 1-2 | 1-5 | 1-4 |

Table 5

| EXAMPLE | | | 6 | | 7 | |
|---|---|---|---|---|---|---|
| Netto-density (kg/m$^3$) | | | 23,5 | 23,2 | 19,6 | 19,9 |
| ILD | | 25 % | 47 | 50 | 25 | 26 |
| | | 40 % (N) | 63 | 65 | 32 | 31 |
| | | 65 % | 128 | 133 | 66 | 63 |
| Sag factor | | | 2,7 | 2,7 | 2,6 | 2,4 |
| CLD | | 25 % | 1,1 | 1,2 | / | / |
| | | 40 % | 1,5 | 1,6 | 0,7 | 0,6 |
| | | 60 % | 2,7 | 2,7 | / | / |
| Elongation by cracking (%) | | | 130 | 135 | 195 | 190 |
| Intensity of tensile stress (kPa) | | | 85 | 85 | 80 | 80 |
| Intensity of cracking stress (N/cm) | | | 1,7 | 1,6 | 2,4 | 2,6 |
| Elasticity (%) | | | 57 | 55 | 60 | 59 |
| Compression set (%) | | 90 % | 10,7 | 9,9 | 9,8 | 10,1 |
| | | 75 % | 7,3 | 7,2 | 6,2 | 7,1 |
| Air resistance (cmH$_2$O) (min-max) | | | 1-4 | 2-5 | 2-6 | 4-7 |

**Claims**

1. A method for preparing a high resilient polyurethane foam, wherein a modified or not high reactive polyether-polyol, having an average molecular weight from 3,000 to 10,000 and an average functionality not larger than 4 is brought into reaction with organic polyisocyanates, a "crosslinker/extender", a catalyst and a chemical and physical blowing means and eventually in the presence of a relatively weak foam stabilizer, characterized in that a polyether-polyol is used of which the amount of primary hydroxyl groups comprises at least 50 %, together with a physical blowing means comprising methylformate.

2. A method as claimed in claim 1, characterized in that the physical blowing means mainly consists of methylformate.

3. A method as claimed in claim 1 or 2, characterized in that use is made of 1 to 30 parts by weight of a physical blowing means comprising methylformate with respect to 100 parts by weight polyol.

4. A method as claimed in one of the claims 1 to 3, characterized in that the physical blowing means consists of at least 50 % by weight methylformate and at the most 50 % by weight of a mixture, consisting of a completely or not halogenated hydrocarbon compound.

5. A method as claimed in claim 4, characterized In that the physical blowing means comprises at least 90 % by weight methylformate.

6. A method as claimed in claim 5, characterized in that use is made of a physical blowing means which substantially consists of pure methylformate.

7. A method as claimed in one of the claims 1 to 6, characterized in that, as chemical blowing means, use is made of water in an amount from 0.5 to 5 parts by weight for 100 parts by weight polyol.

8. A method as claimed in one of the claims 1 to 7, characterized in that as foam stabilizer use is made of a polyalkylsiloxanepolyether blockcopolymere having a weak stabilizing effect and a relatively low molecular weight.

9. A method as claimed in one of the claims 1 to 8, characterized in that use is made of a modified polyether-polyol as a polyol.

10. A method as claimed in claim 9, characterized in that the modified polyol comprises an organic solid phase in dispersion which belongs to the following types :
- a polyaddition product of an alkanolamine with organic polyisocyantes,
- a polymerisation product of the reaction of organic polyisocyanates with a polyamine and/or hydrazine - and/or hydrazide
- vinylcopolymer such as reaction products of acrylonitrile with styrene.

11. A method as claimed in one of the claims 1 to 10, characterized in that fire retarders are added to the reaction mixture.

12. A method as claimed in claim 11, characterized in that 5 to 100 parts by weight melamine for 100 parts by weight polyol are added.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DATABASE WPIL, no. 82-77646, Derwent Publications Ltd, London, GB; & JP-A-57 126 815 (HITACHI CHEMICAL K.K.) 06-08-1982 * Abstract * | 1-6 | C 08 J 9/08<br>C 08 J 9/14 |
| X | FR-A-2 233 345 (UCC) * Page 1, line 27 - page 9, line 32; example 4; claims 1,2,6,9 * | 1-9 | |

TECHNICAL FIELDS SEARCHED (Int. Cl.5)

C 08 J
C 08 K

The present search report has been drawn up for all claims

| Place of search | Date of completion of the search | Examiner |
|---|---|---|
| THE HAGUE | 15-11-1989 | BOURGONJE A.F. |

EPO FORM 1503 03.82 (P0401)